# EUROPEAN PATENT APPLICATION

(11) **EP 4 752 011 A1**
(43) Date of publication of application: **03.06.2026**
(21) Application number: 25219355.2
(22) Date of filing: 28.11.2025
(51) Int. Cl.: B60S 1/54, B60S 1/56

(54) **CLEANING DEVICE FOR SENSOR AND VEHICLE**

(30) Priority: 02.12.2024 CN 202411754926
(71) Applicant: Beijing Voyager Technology Co., Ltd., 100094 Beijing (CN)
(72) Inventor: WANG, Zhenyun, Beijing, 100094 (CN); WANG, Wenjun, Beijing, 100094 (CN); SUN, Jiangyuan, Beijing, 100094 (CN); CHEN, Xiaowei, Beijing, 100094 (CN)
(74) Representative: Marks & Clerk LLP

(57) **Abstract**

A cleaning device (100) for a sensor (101) and a vehicle (1) are provided. The cleaning device (100) includes: a gas pump (110) including a gas outlet; at least one gas storage tank (120) each including a gas outlet end and a gas inlet end coupled to the gas outlet of the gas pump via a check valve, and adapted to store gas provided by the gas pump (110); a valve assembly (130) coupled to a gas outlet end of the at least one gas storage tank (120) and including a plurality of valve outlets; and a plurality of nozzle assemblies (140) each including a nozzle inlet and at least one nozzle portion in gas-flow communication with the nozzle inlet, the nozzle inlet being coupled to a corresponding valve outlet of the plurality of valve outlets, and the at least one nozzle portion being arranged adjacent to the sensor (101).

## Description

### FIELD

Example embodiments of the present disclosure generally relate to the field of vehicles, and in particular to a cleaning device for a sensor and a vehicle.

### BACKGROUND

With the rapid development of remote driving technology and the continuous expansion of its application scenarios, from automatic driving on expressways to remote navigation in urban traffic, remote driving systems are profoundly changing travelling modes of people. At present, in the field of remote driving, sensors are used as "eyes" of a remote driving system, and the accuracy and reliability of the sensors directly affect the performance and safety of the driving system. The remote driving system perceives the surrounding environment in real time through a variety of sensors, such as a camera, a radar, a laser radar (LiDAR), or the like.

However, the sensors inevitably suffer from external environmental factors in the working process, especially their surfaces tend to accumulate contaminants such as dust, rainwater, snowflake, bird droppings and the like. These contaminants may interfere with normal work of the sensors, resulting in inaccurate perception data, which in turn affects decision-making and safety of the remote driving system.

### SUMMARY

In a first aspect of the present disclosure, a cleaning device for a sensor is provided. The cleaning device includes: a gas pump including a gas outlet; at least one gas storage tank each including a gas outlet end and a gas inlet end coupled to the gas outlet of the gas pump via a check valve, and adapted to store, at a predetermined gas pressure range, gas provided by the gas pump; a valve assembly coupled to the gas outlet end of the at least one gas storage tank and including a plurality of valve outlets, the valve assembly being adapted to be controlled to turn on or off a gas flow passage between the gas outlet end and at least one of the plurality of valve outlets; and a plurality of nozzle assemblies each including a nozzle inlet and at least one nozzle portion in gas-flow communication with the nozzle inlet, the nozzle inlet being coupled to a corresponding valve outlet of the plurality of valve outlets, and the at least one nozzle portion being arranged adjacent to the sensor to spray gas with a predetermined pressure to the sensor to clean the sensor when a corresponding gas flow passage is turned on.

In the embodiment of the present disclosure, the gas pump and the gas storage tank may enable the cleaning device to quickly provide high-pressure gas when needed, to realize instant cleaning. The gas storage tank is connected to the gas pump through a check valve, to ensure that the gas is stored and released within a predetermined pressure range, avoiding interference to the detection function of the sensor in the cleaning process. The precise control of the valve assembly enables a flowing direction of the gas to be adjusted as needed, to ensure the pertinence and high efficiency of the cleaning process.

In addition, the nozzle assembly of the cleaning device is arranged near the sensor to ensure that the high-pressure gas is directly sprayed to the surface of the sensor, so that the cleaning efficiency can be improved. Each nozzle assembly is independently controlled, allowing personalized cleaning strategies for different sensors, and further improving the flexibility and adaptability of the cleaning device. Meanwhile, the cleaning device can perform cleaning in real time or on demand during the driving, without interfering with the normal work of the sensor. The cleaning device reduces manual intervention and decreases maintenance cost. In addition, the cleaning device adopts high-pressure gas for cleaning, and compared with a traditional low-pressure gas cleaning solution, the cleaning device has higher cleaning capacity, and can quickly and effectively remove various contaminants on the surface of the sensor, ensuring the cleanliness of the sensor and improving the accuracy of perception data. Other benefits will be described below in connection with corresponding embodiments.

In some embodiments, the cleaning device further includes: an air drying device arranged at the gas outlet of the gas pump and the gas inlet end of the at least one gas storage tank to dry the gas provided by the gas pump.

In some embodiments, the cleaning device further includes: a plurality of quick connectors respectively arranged at at least one of the following positions: between the gas outlet of the gas pump and the gas inlet end of the at least one gas storage tank; between the gas outlet end of the at least one gas storage tank and the valve assembly; and between the valve assembly and the plurality of nozzle assemblies.

In some embodiments, the valve assembly includes at least one of: at least one single-inlet and single-outlet solenoid valve; and at least one single-inlet and multiple-outlet solenoid valve.

In some embodiments, the gas storage tank further comprises: a pressure relief valve configured to open when the gas storage tank has a pressure above a pressure threshold; and a pressure sensor arranged to obtain pressure data in the gas storage tank.

In some embodiments, the cleaning device further includes: a controller coupled to the pressure sensor and the gas pump, and configured to control starting and stopping of the gas pump based on the pressure data obtained by the sensor.

In some embodiments, the tank further includes: a discharge valve adapted to actively or passively discharge liquid from the gas storage tank.

In some embodiments, the nozzle assembly further includes: a nozzle holder arranged adjacent to or integrated with the sensor and including the nozzle inlet and the at least one nozzle portion.

In some embodiments, the air drying device includes: a gas-water separation device, a desiccant drying device, or a combination thereof.

In a second aspect of the present disclosure, a vehicle is provided. The vehicle includes the cleaning device of the first aspect, and a plurality of sensors arranged at a plurality of positions of the vehicle and coupled to the cleaning device.

In some embodiments, a gas pump and at least one gas storage tank of the cleaning device are arranged at a bottom of the vehicle; and/or a valve assembly and a plurality of nozzle assemblies of the cleaning device are arranged at a top of the vehicle.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements. In the drawings:
FIG. 1 shows a simplified schematic diagram of a vehicle according to an embodiment of the present disclosure; and
FIGS. 2-4 show block diagrams of a cleaning device according to some embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as being limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the title of any section/subsection provided herein is not limiting. Various embodiments are described throughout and any type of embodiments may be included in any section/subsection. Furthermore, the embodiments described in any section/subsection may be combined in any manner with any other embodiment described in the same section/subsection and/or different sections/subsections.

In the description of the embodiments of the present disclosure, the terms "including" and the like should be understood as an open-ended inclusion, i.e., "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first", "second", and the like may refer to different or identical objects. Other explicit and implicit definitions may also be included below.

As used herein, the term "model" may learn associations between respective inputs and outputs from training data such that a corresponding output may be generated for a given input after training is completed. The generation of the model may be based on machine learning techniques. Deep learning is a machine learning algorithm that processes inputs and provides corresponding outputs by using a multi-layer processing unit. In the text, "model" may also be referred to as a "machine learning model", "machine learning network", or "network", which terms are used interchangeably herein. A model may also include different types of processing units or networks.

As used herein, a "unit", an "operating unit", or a "subunit" may be composed of a machine learning model or network of any suitable structure. As used herein, a set of elements or similar expressions may include one or more such elements. For example, a "set of convolution units" may include one or more convolution units.

As mentioned briefly above, the sensor is easily affected by the external environment in the working process, and the surface of the sensor may accumulate contaminants such as dust, rain and snow, debris and the like. These contaminants not only interfere with the normal work of the sensor, cause inaccurate perception data, but also affect the decision-making and safety of the remote driving system.

At present, several solutions have been proposed to address issues of sensor cleaning. The first is a solution based on water spray cleaning with a spray head. According to this solution, the spray head is installed near the sensor, and sprays cleaning liquid or water by using a control unit when cleaning is needed, to flush a lens or a detection surface of a sensor. The second is a mechanical wiping cleaning solution, in which a cleaning wiping cloth or a special cleaning brush is driven by a mechanical arm or a similar transmission device to wipe a surface of the lens or the detection surface of the sensor according to a set track, and the cleaning process is started periodically or on demand. In addition, there is also a solution based on gas-blowing cleaning, in which through the cooperation of an air blower or a fan with a ventilation pipeline, the low-pressure gas flow is blown to the surface of the sensor to remove attached dust or water droplets.

However, the solution of water spray cleaning with the spray head and the mechanical wiping cleaning solution may generate temporary shielding on the detection surface of the sensor during working, resulting in inaccurate perception data of the sensor, and even false identification, thereby affecting normal operation of the remote driving system. In addition, these cleaning works are performed in the working process of the remote driving system, posing a certain safety risk. Due to the fact that the gas blowing cleaning solution relies on a low-pressure gas source, the gas pressure is low, the cleaning effect is poor, and the effect for removing the dirt from the surface of the sensor is limited.

To solve or at least partially solve the above problems or other potential problems of cleaning a sensor in the prior art, embodiments of the present disclosure provide a solution for a cleaning device for a sensor. According to various embodiments of the present disclosure, the cleaning device includes a gas pump. The gas pump has a gas outlet. Further, the cleaning device includes at least one gas storage tank, each gas storage tank includes a gas outlet end and a gas inlet end connected to a gas outlet of the gas pump through a check valve. The gas storage tank is capable of storing, within a predetermined gas pressure range, high-pressure gas provided by the gas pump, ensuring that the gas can be rapidly released for cleaning when needed.

Further, the cleaning device includes a valve assembly and a plurality of nozzle assemblies. The valve assembly is coupled to the gas outlet end of the at least one gas storage tank, and the valve assembly includes a plurality of valve outlets. The valve assembly may adjust opening and closing of a gas flow passage according to a preset program or real-time control, so that the gas is capable of flowing from the gas storage tank to the corresponding nozzle assembly as needed. Further, each nozzle assembly includes a nozzle inlet and at least one nozzle portion in gas-flow communication with the nozzle inlet. The nozzle inlet is directly connected to a corresponding valve outlet of the valve assembly, and the at least one nozzle portion is arranged adjacent the sensor. When the valve assembly opens the gas flow passage, high-pressure gas in the gas storage tank is sprayed to a surface of the sensor through the nozzle assembly, and contaminants such as raindrops, water stains, dirty points, bird droppings, leaves, dust, mud, freezing, snow accumulation, mosquitoes, mosquito remains, debris and the like, on the sensor are removed by an impact force of the high-pressure gas flow.

In this way, the cleaning device of the present disclosure can clean the sensor in real time or on demand in the working process of the remote driving system, which not only improves the cleaning efficiency, but also does not interfere with the detection function of the sensor, ensuring the normal work of the sensor and the safety of the remote driving system.

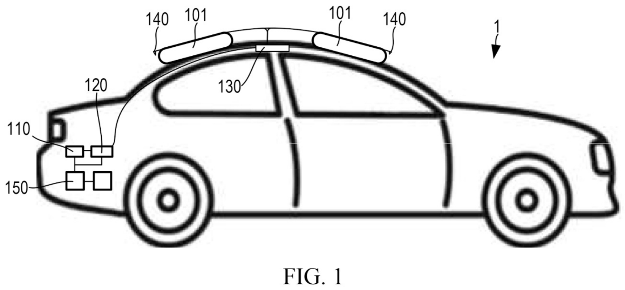

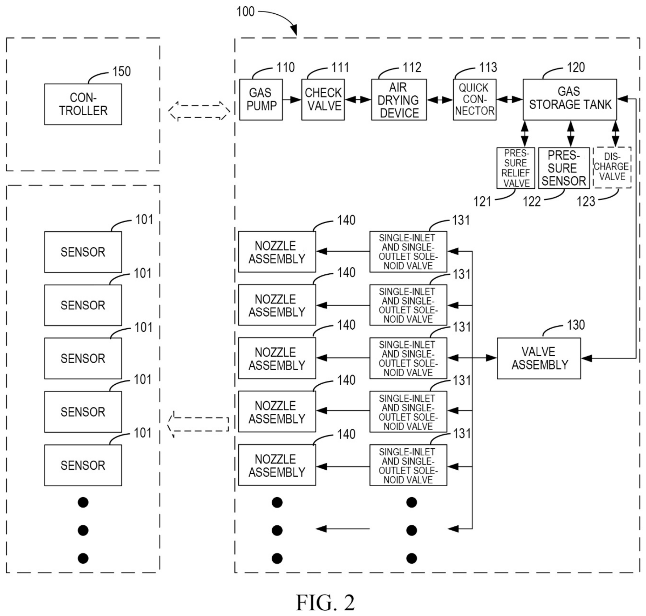

FIG. 1 shows a simplified schematic diagram of a vehicle 1 according to an embodiment of the present disclosure. FIGS. 2-4 show block diagrams of a cleaning device 100 according to some embodiments of the present disclosure. Example structures and working processes of the cleaning device 100 for a sensor 101 in the vehicle 1 will be described below in conjunction with FIGS. 1-4. The vehicle 1 according to the embodiments of the present disclosure may include a remote driving vehicle, or may include any suitable other vehicle other than the remote driving vehicle. Hereinafter, a concept of the present disclosure will be described mainly by taking the vehicle 1 as a remote driving vehicle as an example. It should be understood that the same applies to other vehicles, and details thereof will not be described herein again.

The vehicle 1 according to an embodiment of the present disclosure includes a cleaning device 100 and a plurality of sensors 101. A plurality of cleaning devices 100 are coupled to the plurality of sensors 101, respectively. Meanwhile, the plurality of sensors 101 are respectively arranged at a plurality of positions of the vehicle 1, and the sensors 101 are respectively installed at a plurality of positions such as the front, the rear, a side and a roof of the vehicle, so as to realize omnidirectional environmental perception. Types of the sensors 101 include, but are not limited to, lidar (LiDAR), camera, radar, etc., and these sensors 101 collectively provide necessary environmental data for the remote driving system.

Further, a control system on the vehicle 1 is connected to the cleaning device 100 for the sensor 101, and the cleaning frequency and the spraying intensity are automatically adjusted based on the driving state of the vehicle 1 and the cleaning state fed back by the sensor 101. During a driving process of severe weather or a long time, the cleaning device 100 may automatically or periodically perform cleaning according to user settings, ensuring that the sensor 101 is always kept in an optimal working state. In addition, the control system of the vehicle 1 may also adjust the cleaning frequency of the cleaning device 100 in real time according to the working state of the sensor 101, ensuring that the sensor 101 can be efficiently cleaned in different working environments.

When the vehicle 1 is started and enters the working state, the cleaning device 100 automatically detects and cleans a surface of the sensor 101 according to a predetermined cleaning cycle or a cleaning requirement for the sensor 101 without affecting the performance of the vehicle 1 and the function of the sensor 101. According to the vehicle 1, through integrating the cleaning device 100 for the sensor 101, the sensor 101 can be kept clean in various driving environments, the accumulation of contaminants such as dust and rainwater can be avoided, the efficient operation of the cleaning device 100 can be ensured through automatic control, enabling the vehicle 1 to maintain good perception capability under all-weather and various weather conditions, thereby providing high-precision data support for the remote driving system, and effectively improving the safety, stability and reliability of the remote driving system.

In some embodiments, a gas pump 110 and at least one gas storage tank 120 of the cleaning device 100 are arranged at the bottom of the vehicle 1. Since the gas pump 110 and the gas storage tank 120 are large in size and require being supported by higher gas pressure, the gas pump 110 and the gas storage tank 120 are arranged at the bottom of the vehicle 1 to effectively utilize the space of a chassis, maintain the balance of a center of gravity of the vehicle 1, and avoid unnecessary occupation of the space of other parts of the vehicle body. The bottom arrangement can also reduce the impact of these components on the interior or exterior appearance of the vehicle 1, making the design of the vehicle 1 more compact and aesthetic.

Further, a valve assembly 130 and a plurality of nozzle assemblies 140 of the cleaning device 100 are arranged on top of the vehicle 1. Since the sensors 101 may be installed at the front, roof, or other positions of the vehicle 1, the nozzle assembly 140 arranged on the roof can effectively clean the sensors 101 on the roof, for example, arranged at positions of the sensors 101 such as radar, LiDAR, camera, or the like. Installing the nozzle assembly 140 on the roof can ensure the directionality of the cleaning gas flow, ensure that the gas flow can be directly sprayed onto the surface of the sensor 101, thereby improving the cleaning efficiency.

The valve assembly 130 is connected to the plurality of nozzle assemblies 140 through pipelines, and the valve assembly 130 may adjust the distribution of the gas flow according to the cleaning requirement, ensuring that nozzles at different positions of the sensors 101 obtain correct gas flow supply when needed. Through the plurality of nozzle assemblies 140 installed at the top of the vehicle 1, the cleaning requirement around the sensor 101 on the roof can be efficiently covered, ensuring the normal operation of the sensor 101 in various driving environments.

For example, when the vehicle 1 is started, the gas pump 110 arranged at the bottom starts to work, and the gas is conveyed to the gas storage tank 120 through the pipeline. Gas is stored at a predetermined pressure in the gas storage tank 120. When the sensor 101 needs to be cleaned, the control system adjusts the gas flow passage through the valve assembly 130, selectively opens a valve port connected to a specific nozzle assembly 140, and the gas is sprayed to the surface of the sensor 101 through a nozzle in the form of high-pressure gas flow, to remove contaminants such as dust, water droplets and leaves. In this way, the nozzle assembly 140 can effectively clean the sensors 101 on the roof and other positions to ensure that the perception system of the vehicle 1 is always kept in the optimal working state.

Through this arrangement, the reliability and the cleaning efficiency of the cleaning device 100 can be effectively improved, and the long-time efficient operation of the cleaning device 100 can be ensured while ensuring the stable operation of the remote driving system. In addition, by adopting this layout mode, the vehicle 1 is more compact, and can adapt to various road conditions and environments, improving the overall performance and safety of the vehicle 1.

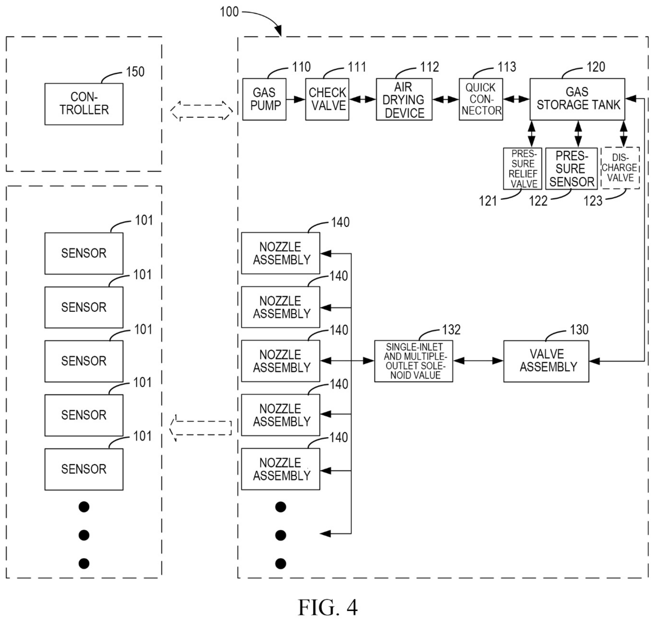

The specific structure of the cleaning device 100 will be described below with reference to FIGS. 1 and 4. In an embodiment of the present disclosure, the cleaning device 100 generally includes a gas pump 110, a gas storage tank 120, a valve assembly 130, and a plurality of nozzle assemblies 140, and is intended to clean the surface of the sensor 101 through high-pressure gas spraying, to ensure that the sensor 101 can keep clean under various environmental conditions, thereby improving the reliability and safety of the remote driving system.

Further, the gas pump 110 serves as a gas source of the cleaning device 100 and has a gas outlet for generating and outputting high-pressure gas. A working pressure of the gas pump 110 may be adjusted according to the cleaning requirement of the sensor 101, ensuring that the gas pressure is sufficient to effectively remove contaminants on the surface of the sensor 101, and the working pressure of the gas pump 110 is not specifically limited in the embodiments of the present disclosure. For example, the gas pump 110 may adopt a high-pressure gas pump, and the working pressure of the gas pump 110 may be 20 bar or higher.

Meanwhile, the gas pump 110 has a small volume, and may be easily installed in the limited space of the vehicle 1, saving the installation space and adapting to the requirements of different vehicle models. A damping device is provided at an installing point of the gas pump 110, effectively reducing the vibration generated during work, thereby avoiding the impact of vibration on the gas pump 110 and other system components, and reducing the risk of vibration transmission to other components of the vehicle 1. The gas pump 110 has an efficient heat dissipation design, which can maintain a proper working temperature in a long-time working process, avoids equipment failure due to overheating, and ensures stability and durability of the gas pump 110 under high load conditions. The gas pump 110 adopts a low noise design, which can effectively reduce the noise generated during operation, avoids discomfort to people inside and outside the vehicle, and ensures the driving experience of the vehicle owner and passengers.

The gas pump 110 has a high inflation efficiency, which can quickly respond to the cleaning requirement, realizes the instant starting and cleaning effects, ensures timely cleaning of the sensor 101, and does not affect the remote driving function of the vehicle 1. The gas pump 110 has multiple safety protection functions such as protection for overcurrent, overheating, short circuit and power reverse connection, which can automatically stop working when an abnormal condition occurs, and avoids the safety problem caused by equipment failure. The gas pump 110 has ultra-long endurance performance, has a design life greater than or equal to a service life cycle of the vehicle 1, can stably work for a long time, meets the long-term use requirement of the vehicle 1, and avoids frequent maintenance or replacement due to the failure of the gas pump 110.

Further, the gas outlet of the gas pump 110 is connected to the gas inlet end of the at least one gas storage tank 120 through the check valve 111 having high-pressure and high/low-temperature resistance, ensuring that the gas can only flow in a single direction, and preventing the gas in the cleaning device 100 from flowing back to the gas pump 110. The gas storage tank 120 is capable of storing high-pressure gas provided by the gas pump 110 within a predetermined gas pressure range, ensuring that the gas can be rapidly released for cleaning the sensor 101 when needed. Each gas storage tank 120 has an outlet end for delivering stored gas to the valve assembly 130 and the nozzle assembly 140 during the cleaning requirements.

In some embodiments, the gas pump 110 may be installed in a central position at the bottom of the vehicle 1 or other areas that do not affect the normal operation of the vehicle 1, and the gas storage tank 120 is configured as one or more gas storage tanks according to actual requirements, which are arranged at a suitable position of the bottom of the vehicle, such as in a gap below a vehicle frame. The capacity of the gas storage tank 120 may be selected according to the cleaning requirement and the cleaning frequency of the vehicle 1, ensuring that sufficient gas can be stored to meet the long-time cleaning task, and the positions of the gas pump 110 and the gas storage tank 120 are not specifically limited in the embodiments of the present disclosure. For example, the gas storage tank 120 may be made of cast aluminum, stainless steel, glass fiber, carbon fiber and other anti-rust corrosion-resistant materials.

In this way, a combination of the gas pump 110 and the gas storage tank 120 not only can provide high-pressure gas in real time or on demand in the driving process of the vehicle 1, perform effectively cleaning of the sensor 101, but also ensure the safety and reliability of the system. The use of the gas storage tank 120 enables the gas pump 110 to work intermittently, reducing the long-term running burden of the gas pump 110, also improving the response speed of the cleaning device 100, and ensuring that the gas can be rapidly sprayed to the surface of the sensor 101 when the cleaning requirement is met.

Further, the valve assembly 130 is coupled to the gas outlet end of the at least one gas storage tank 120 for controlling the flow of gas. The valve assembly 130 is provided with multiple valve outlets, and each valve outlet corresponds to one or more nozzle assemblies 140 for controlling the flow of gas from the gas storage tank 120 to the nozzle assembly(assemblies) 140.

The valve assembly 130 may be controlled according to a preset program or real-time requirement, to turn on or off a gas flow passage between each valve outlet and the gas outlet end of the gas storage tank 120, so that the cleaning device 100 can accurately adjust the gas flow direction, ensuring that the gas is sprayed to the surface of the sensor 101 to be cleaned as needed. In some embodiments, the valve assembly 130 may be a solenoid valve or other type of control valve (such as a dispensing valve or the like), has a high frequency on/off capability, and is capable of responding to the cleaning requirement quickly, which is not specifically limited in the embodiments of the present disclosure.

In this way, the valve assembly 130 can not only enable precise control of the gas flow direction, but also can ensure pertinence and high efficiency of the cleaning process. The valve assembly 130 may enable the cleaning device 100 to clean the sensor 101 in real time or on demand during the driving process of the vehicle 1, reducing interference to the detection function of the sensor 101, and improving the efficiency and safety of cleaning. Meanwhile, the use of the valve assembly 130 also makes the gas consumption more reasonable, reducing the energy consumption and maintenance cost of the cleaning device 100.

Further, the plurality of nozzle assemblies 140 may effectively clean the sensors 101 at different positions on the vehicle 1. Each nozzle assembly 140 includes a nozzle inlet and at least one nozzle portion in gas-flow communication with the nozzle inlet. The nozzle inlet is directly coupled to a corresponding outlet of the valve assembly 130 by a pipeline or other connection means, to ensure that high-pressure gas can flow from the gas storage tank 120 to the nozzle assembly 140 as needed. For example, the gas flow passage may be implemented by a pipeline, and the material of the pipeline is not limited to materials such as nylon, plastic, rubber and the like.

The nozzle portion is arranged near the sensor 101 to ensure that the gas can be sprayed directly to the surface of the sensor 101 when the valve assembly 130 turns on the gas flow passage. This arrangement not only improves the cleaning efficiency, but also reduces the diffusion of the gas outside the sensor 101 and decreases the gas consumption. The nozzle assembly 140 may be arranged according to a shape, a size, and an installing position of the sensor 101 to ensure that gas spraying can cover a part of the sensor 101, such as a lens, a detection surface, or the like.

In this way, the nozzle assembly 140 is capable of cleaning the sensor 101 in real time or on demand during the driving process of the vehicle 1, ensuring the cleanliness and accuracy of the sensor 101. Each nozzle assembly 140 is independently controlled, allowing individualized cleaning strategies for different sensors 101, and further improving the flexibility and adaptability of the cleaning device 100.

In some embodiments, the cleaning device 100 further includes an air drying device 112. The air drying device 112 is arranged between the gas outlet of the gas pump 110 and the gas inlet end of the at least one gas storage tank 120. The air drying device 112 performs drying treatment on the gas provided by the gas pump 110 to prevent moisture in the air from entering the cleaning device 100, thereby affecting the service life and the cleaning effect of the cleaning device 100.

Further, the arrangement position of the air drying device 112 is located between the gas pump 110 and the gas storage tank 120, without affecting the working efficiency of the gas pump 110 and increasing the burden of the gas storage tank 120, and meanwhile, facilitating the maintenance and replacement of consumables. The use of the air drying device 112 further enhances the reliability and effectiveness of the cleaning device 100, ensures that the sensor 101 can keep clean under various environmental conditions, and improves the safety and performance of the remote driving system.

In some embodiments, the air drying device 112 includes a gas-water separation device, a desiccant drying device, or a combination thereof. The air drying device 112 is configured to remove moisture in the gas flow from the gas pump 110, preventing the moisture from damaging the cleaning device 100 and components thereof, ensuring the cleaning property of the gas, and improving the cleaning effect and the long-term stability of the cleaning device 100. Specifically, the air drying device 112 includes one of the following three forms or a combination thereof.

First, the air drying device 112 may be a gas-water separation device. The gas-water separation device is arranged between the gas outlet of the gas pump 110 and the gas inlet end of the gas storage tank 120, and is used for separating moisture and other impurities in the air to ensure the air entering the gas storage tank 120 to be dry. The gas-water separation device may remove moisture from the gas flow physically by using a filter screen, a centrifugal force separation or condensation technology. The air drying device 112 can effectively prevent water droplets from entering the gas storage tank 120 or the nozzle, avoiding corrosion, icing or nozzle blockage of the cleaning device 100 due to the humidity of the gas, thereby improving the cleaning effect and the system life. Meanwhile, the air drying device 112 also ensures that secondary pollution to the surface of the sensor 101 cannot be caused by the presence of moisture when the gas is sprayed.

Further, the gas-water separation device may adopt a corrosion-resistant material, such as stainless steel or engineering plastic, to ensure stability and durability during the long-term use. The external structure of the gas-water separation device may be arranged in a detachable manner for regular cleaning and maintenance, thereby maintaining an efficient moisture separation function.

In some embodiments, alternatively or additionally, the air drying device 112 may be a desiccant drying device. The desiccant drying device further dries the gas by adsorbing moisture in the air. A desiccant may be a variety of materials, such as silica gel, molecular sieve, activated carbon or other materials, which can effectively adsorb moisture in the gas flow, and ensure that the gas maintains a dry state before entering the gas storage tank 120 and the nozzle, which is not specifically limited in the embodiments of the present disclosure. The desiccant may be periodically replaced or regenerated according to actual requirements to ensure continuous drying capacity.

Further, the desiccant drying device may employ a sealing structure to prevent moisture in the air from being re-introduced into the cleaning device 100. An installation position of the desiccant drying device is located after the gas-water separation device, ensuring that the preliminarily separated gas flow can be further dried to provide better gas flow quality.

Further, in some embodiments, a combination of the gas-water separation device and the desiccant drying device is used in the air drying device 112 to ensure the optimal drying effect. The gas-water separation device first removes most of the moisture from the gas flow, and the desiccant drying device further adsorbs the trace moisture in the gas flow, thereby ensuring that the gas entering the gas storage tank 120 reaches a dry standard. Through the combination mode, the moisture content of the air entering the gas storage tank can be remarkably reduced, and meanwhile, the cleanliness and the stability of the gas flow are improved.

For example, if the operation environment of the cleaning device 100 is moist or the moisture content of the gas flow is relatively high, the desiccant drying device may be preferentially used, and if the operation environment is relatively dry, the gas-water separation device may be used independently. When the desiccant drying device and the gas-water separation device are used in combination, not only the air drying effect can be improved, but also the operation cost of the cleaning device 100 can be reduced, and the reliability and stability of the cleaning device 100 can be improved.

By configuring the gas-water separation device and/or the desiccant drying device, the accumulation of moisture in the cleaning device 100 can be effectively prevented, the adverse effects such as corrosion, blockage and the like of the gas pump 110, the gas storage tank 120 and the nozzle assembly 140 can be reduced, and the long-term stability of the cleaning device 100 can be improved. In addition, the dried gas can provide a more stable and efficient cleaning effect, and avoid the problems such as freezing, condensation and the like, caused by dampness, on the surface of the sensor 101, improving the cleaning reliability and precision of the sensor 101.

In some embodiments, the cleaning device 100 further includes a plurality of quick connectors 113 arranged at the following positions to enable quick connection and detachment between components inside the cleaning device 100.

First, the quick connector 113 is arranged between the gas outlet of the gas pump 110 and the gas inlet end of the gas storage tank 120, and one or more quick connectors may be provided. Through these quick connectors 113, the gas pump 110 may be rapidly connected to the gas storage tank 120, ensuring that the gas can flow smoothly into the gas storage tank 120 and be stored, and also facilitating subsequent maintenance and replacement. Since the gas pump 110 needs to be periodically checked or maintained, the setting of the quick connector 113 makes the connection and detachment simple and quick. Further, the check valve 111 is connected to the pipeline through an external or integrated quick connector 113, and is further connected to the air drying device 112 through the quick connector 113. The air drying device 112 is connected to the pipeline through the quick connector 113, and is further connected to the gas storage tank 120 through the quick connector 113.

Next, the quick connector 113 is arranged between the outlet end of the gas storage tank 120 and the valve assembly 130. The connectors are used for connecting the gas storage tank 120 and the valve assembly 130, ensuring that the gas stored in the gas storage tank 120 can flow smoothly to the valve assembly 130, and controlling the distribution of the gas flow through the valve assembly 130. The use of the quick connector 113 makes this connection process efficient and convenient to disassemble, facilitating servicing or replacement of the valve assembly 130.

Further, the quick connector 113 is also arranged between the valve assembly 130 and the plurality of nozzle assemblies 140 with a plurality of quick connectors 113 arranged therebetween. These quick connectors 113 are used to connect the valve assembly 130 and the nozzle assembly 140 to ensure that the gas flow passes from the valve assembly 130 to the nozzle part through the pipeline, and finally cleans the surface of the sensor 101. Since the nozzle assembly 140 may need to be cleaned or replaced regularly, the application of the quick connector 113 in this section may greatly improve the maintenance convenience of the cleaning device 100 while reducing unnecessary downtime.

In some embodiments, the valve assembly 130 of the cleaning device 100 includes at least one following type of solenoid valve for controlling the opening and closing of the gas flowing path and adjusting the distribution of the gas flow. For example, the valve assembly 130 includes a metal valve or plastic valve with capabilities of high and low temperature resistance and high-pressure resistance. By controlling the on/off of the gas flow, these solenoid valves ensure the cleaning device 100 to accurately clean the sensor 101 according to actual requirements. Specifically, the valve assembly 130 includes at least one of the following: at least one single-inlet and single-outlet solenoid valve 131; and at least one single-inlet and multiple-outlet solenoid valve 132.

Specifically, in some embodiments, as shown in FIG. 2, the valve assembly 130 may include at least one single-inlet and single-outlet solenoid valve 131, and the solenoid valve has a gas inlet and a gas outlet. This type of solenoid valve is capable of opening or closing the gas flow passage when a control signal is received, thereby realizing the control for inflowing or outflowing of the gas. Specifically, when the single-inlet and single-outlet solenoid valve 131 is opened, the gas enters the gas inlet of the solenoid valve from pipelines of the gas storage tank 120 and the gas pump 110, and flows towards the nozzle assembly 140 through the gas outlet of the solenoid valve to realize the cleaning of the sensor 101. When the solenoid valve is closed, the gas flow is completely cut off, preventing unnecessary gas flow leakage. The application of the solenoid valve simplifies the complexity of gas flow control, can complete the opening and closing of the gas flow in a short time, and meets the requirement for high response of the cleaning device 100 to gas flow adjustment.

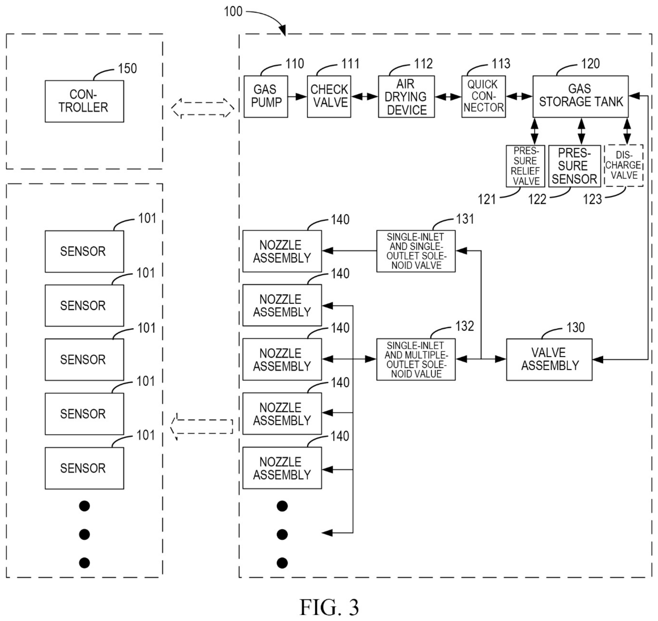

In some embodiments, as shown in FIGS. 3 and 4, the valve assembly 130 may further include at least one single-inlet and multiple-outlet solenoid valve 132. The solenoid valve has a gas inlet and a plurality of gas outlets, and the gas flow may be distributed to the plurality of gas outlets. This type of solenoid valve is suitable for a situation in which the gas is required to be distributed to the plurality of nozzle assemblies 140, ensuring that the gas flow can simultaneously clean the surfaces of the plurality of sensors 101 as required. The single-inlet and multiple-outlet solenoid valve 132 is used for distributing the gas from the gas storage tank 120 to respective nozzle assemblies 140 through different gas outlets according to the working mode of the cleaning device 100. By controlling the solenoid valve, the gas flow distribution of each nozzle assembly 140 in the cleaning process can be accurately adjusted, so that the cleaning of the sensor 101 is more uniform and efficient. Further, with continued reference to FIG. 3, the valve assembly 130 may employ a combination of the single-inlet and single-outlet solenoid valve 131 and the single-inlet and multiple-outlet solenoid valve 132 to distribute gas flow.

Further, the opening and closing of the solenoid valve are adjusted by the control system. When the sensor 101 needs to be cleaned, the control system may control the working state of a corresponding solenoid valve according to the cleaning requirement and the specific position of the sensor 101. For the single-inlet and single-outlet solenoid valve 131, the control system may open or close the valve for a predetermined period of time to precisely control the on/off of the gas flow. For the single-inlet and multiple-outlet solenoid valve 132, the control system may selectively open the corresponding gas outlet according to the requirement of each nozzle assembly 140, and adjust the cleaning strength and gas flow distribution of different sensors 101. The precise control of the solenoid valve ensures that the cleaning device 100 can maximize efficiency and reduce energy waste in the working process.

In this way, the flexible gas flow control is achieved by a combination of the single-inlet and single-outlet solenoid valve 131 and the single-inlet and multiple-outlet solenoid valve 132. The use of the solenoid valve ensures the precise regulation and distribution of the gas flow, so that the cleaning device 100 can optimize the working efficiency according to the actual situations. The plurality of sensors 101 can be cleaned at the same time in one working cycle through the single-inlet and multiple-outlet solenoid valve 132, reducing the cleaning time, and improving the cleaning efficiency of the system; and the single-inlet and single-outlet solenoid valve 131 provides accurate cleaning control of a single sensor 101.

In some embodiments, the gas storage tank 120 of the cleaning device 100 further includes a pressure relief valve 121 and a pressure sensor 122. The gas storage tank 120 is not only used for storing high-pressure gas provided by the gas pump 110, but also ensures that the gas storage tank 120 is always within a safe and stable pressure range in the working process.

Further, the pressure relief valve 121 is configured to automatically open when the gas pressure in the gas storage tank 120 exceeds a preset safety pressure threshold, and release excess gas to prevent the gas pressure in the gas storage tank 120 from being too high. The opening of the pressure relief valve 121 ensures that the gas storage tank 120 can effectively prevent the gas tank from the risk of damage or explosion due to excessive pressure in the case of overpressure. For example, when the gas pressure in the gas storage tank 120 exceeds the set safety threshold, the pressure relief valve 121 will be opened, and the gas is released to the external environment through a dedicated gas discharge passage, thereby reducing the pressure inside the gas storage tank 120 and protecting the safe operation of the cleaning device 100. The pressure relief valve 121 may ensure reliability of the cleaning device 100 under long-term and high-pressure conditions. For example, the pressure relief valve 121 may adopt active pressure relief or passive pressure relief.

Secondly, a pressure sensor 122 is arranged in the gas storage tank 120 and is used for monitoring the gas pressure change within the gas storage tank 120 in real time. The pressure sensor 122 is capable of obtaining pressure data within the gas storage tank 120 and transmits these data to the control system. The control system may judge the working state of the gas storage tank 120 in real time according to the data fed back by the sensor 101, and adjust the gas pressure or start other protection measures as needed. Through the pressure sensor 122, the cleaning device 100 can automatically start the gas pump 110 to supplement when the gas pressure is too low, and when the gas pressure is too high, the control system can activate the pressure relief valve 121 for deflating or closing the gas pump 110, thereby ensuring that the entire cleaning device 100 is always operating in a safe working pressure range.

Further, the cooperative work of the pressure relief valve 121 and the pressure sensor 122 enables automatic control and safety redundancy protection of the gas storage tank 120. In some embodiments, the cleaning device 100 includes a controller 150 (that is, the control system described above), the controller 150 is connected to the pressure sensor 122 and the gas pump 110, and is configured to control starting and stopping of the gas pump 110 according to pressure data obtained by the pressure sensor 122 to ensure efficient and safe operation of the cleaning device 100.

Further, the controller 150 is capable of determining whether the cleaning device 100 needs to supplement the gas or whether the pressure is too high by monitoring the pressure data within the gas storage tank 120 in real time. When the pressure within the gas storage tank 120 is lower than the preset threshold, the controller 150 will start the gas pump 110, to supplement the gas into the gas storage tank 120, and ensure that the system can quickly provide high-pressure gas for cleaning when needed. In contrast, when the pressure sensor 122 detects that the pressure within the gas storage tank 120 exceeds a preset safety threshold, the controller 150 stops the operation of the gas pump 110 and prevents the overpressure condition from occurring, and at the same time, the pressure relief valve 121 may be triggered to release the excess gas to ensure the safety of the system.

In this way, by combining the cooperative work of the controller 150, the pressure sensor 122, and the gas pump 110, the cleaning device 100 in the embodiments of the present disclosure can realize precise gas pressure management, and ensure stable and proper supply of the gas during the cleaning process. The controller 150 remotely controls the gas pump 110 according to real-time data provided by the pressure sensor 122, effectively avoiding the situation that the gas pressure is too high or too low, and ensuring the stable operation of the gas pump 110 and the efficient cleaning of the cleaning device 100. In addition, the use of the controller 150 enables the cleaning device 100 to dynamically adjust the gas supply according to actual requirements, reducing manual intervention, and decreasing maintenance costs.

In some embodiments, the gas storage tank 120 includes a discharge valve 123 configured to be able to actively or passively discharge liquid accumulated in the gas storage tank 120, to ensure the pure nature of the gas within the gas storage tank 120 and the stable operation of the cleaning device 100. For example, the discharge valve 123 may be connected to the gas storage tank 120 in a threaded connection or other connection manner.

Further, the discharge valve 123 is configured to remove liquid (moisture or other impurities) that may be accumulated inside the gas storage tank 120, and the liquid may be derived from condensation of moisture in the air or water droplets generated in the cleaning process. If the liquid is accumulated in the gas storage tank 120 for a long time, the gas pressure stability of the system, the service life of the equipment and the cleaning effect may be affected.

Further, the discharge valve 123 is capable of actively or passively discharging the liquid in the tank 120 as required. In the passive discharging mode, accumulated water in the gas storage tank 120 naturally flows out through gravity. The discharge valve 123 may be configured as a self-weight valve, and when the liquid level in the gas storage tank 120 reaches a certain height, the valve is automatically opened, and the liquid flows out. To avoid excessive liquid accumulation, the discharge valve 123 may set a threshold such that the valve will be opened only when the amount of accumulated water reaches a certain amount.

In the active discharging mode, the discharge valve 123 is connected to the controller 150 and may be triggered by the controller 150 or an instruction of an operator. When water is required to be discharged, the controller 150 may issue a signal to activate the discharging mechanism of the vehicle 1 via a pneumatic or electric device to force discharge of the liquid from the gas storage tank 120. This mode is adapted to ensure that the system is not affected by moisture by active discharge when the tank 120 needs to be cleaned regularly or in a high humidity environment.

Further, the discharge valve 123 may be made of a material resistant to high pressure and corrosion, to ensure reliability and durability in long-term use. The material may include stainless steel, plastic, aluminum alloy, etc., which is not specifically limited in the embodiments of the present disclosure, and these materials have strong weather resistance, corrosion resistance, and stability under high pressure. An interface of the discharge valve 123 needs to be matched with the discharge pipeline of the gas storage tank 120, and a sealing ring and the like are arranged to ensure the sealing performance and prevent gas leakage.

In the working process of the cleaning device 100, when the gas pump 110 works, moisture in the air may condense in the gas storage tank 120, resulting in accumulated water. If the controller 150 is set as active discharge, the controller 150 may periodically monitor the water level in the gas storage tank 120, and open the discharge valve 123 for liquid discharge as needed. In the passive mode, when the water level reaches a certain height, the discharge valve 123 will be automatically opened, and the liquid is discharged. Opening and closing of the discharge valve 123 is associated with a sensor 101 for the gas pressure or liquid height, ensuring automation and accuracy of the discharging process.

In this way, the cleaning device 100 can effectively remove the liquid accumulated in the gas storage tank 120 during use, thereby avoiding the liquid from interfering with the gas pressure of the gas storage tank 120 and damaging the device. Regardless of active or passive discharge, it can be ensured that a clean and dry environment is maintained in the gas storage tank 120, thereby ensuring the continuous and stable operation of the cleaning device 100. In addition, the configuration of the discharge valve 123 reduces the frequency of manual maintenance, improves the convenience of use of the cleaning device 100, and provides a more efficient and reliable cleaning solution for the user.

In some embodiments, the nozzle assembly 140 may include a nozzle holder. The nozzle holder is arranged adjacent to or integrated with the sensor 101 and includes a nozzle inlet and at least one nozzle portion. The nozzle holder not only ensures that the nozzle assembly 140 can accurately align with the surface of the sensor 101, but also can stably support the nozzle to ensure effective spraying of the cleaning gas flow.

Further, the nozzle holder is configured to securely position the nozzle portion and the nozzle inlet adjacent the sensor 101, to ensure that high-pressure gas can be sprayed onto the surface of the sensor 101 for cleaning at a predetermined angle and intensity. The nozzle holder can effectively prevent the nozzle from deviating or vibrating during use, thereby ensuring the efficiency and accuracy of the cleaning process.

The nozzle holder may be made of lightweight and durable material to ensure its stability and durability under high pressure gas flow. A size and a shape of the nozzle holder may be set according to the actual arrangement requirement of the sensor 101, and may be set as an adjustable structure, allowing the nozzle assembly 140 to be flexibly installed according to different configurations of the vehicle 1.

The nozzle holder is disposed at a position sufficiently close to the surface of the sensor 101 to ensure that the gas flow can effectively cover the surface of the sensor 101 and does not interfere with normal work of the sensor 101. Further, in some embodiments, the nozzle holder may be integrated with the sensor 101 to reduce the installing space and improve the overall compactness and stability of the system.

The arrangement mode of the nozzle holder enables the nozzle portion to always maintain a suitable distance from the surface of the sensor 101, avoiding excessive interference to the function of the sensor 101 during the spraying process. The nozzle portion is connected to a gas flow pipeline through the nozzle inlet, so that compressed gas can be accurately sprayed to the surface of the sensor 101, and contaminants such as dust, water drops, bird droppings and leaves are removed. By integrating or arranging the nozzle holder close to the sensor 101, both the gas flow direction and the spraying angle in the cleaning process can be optimized to ensure the maximization of the cleaning effect.

The nozzle holder also includes a structural assembly that secures the nozzle portion, to ensure that the gas flow can be sprayed with an optimal effect. The nozzle portion may include a plurality of nozzle holes that may be precisely adjusted as needed to accommodate different types of sensors 101 or cleaning requirements. For example, a size, a shape and a spraying angle of the nozzle hole may be arranged according to the surface structure of the sensor 101. Accordingly, the nozzle assembly 140 is capable of providing a uniform and effective gas flow during cleaning, thereby avoiding missing cleaning areas or causing damage to the sensor 101 due to excessively strong gas flow.

By using the nozzle holder, the nozzle assembly 140 can be better positioned and supported to ensure accurate spraying of gas flow and efficient cleaning of the surface of the sensor 101. The stability and flexibility of the nozzle holder can ensure consistency and reliability of the cleaning effect during long-term use. In addition, arranging or integrating the nozzle holder adjacent to the sensor 101 can avoid physical contact of the nozzle with the sensor 101, thereby reducing the risk of damage to the sensor 101.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A cleaning device (100) for a sensor (101), **characterized by** comprising:
a gas pump (110) comprising a gas outlet;
at least one gas storage tank (120) each comprising a gas outlet end and a gas inlet end coupled to the gas outlet of the gas pump (110) via a check valve (111), and adapted to store, at a predetermined gas pressure range, gas provided by the gas pump (110);
a valve assembly (130) coupled to the gas outlet end of the at least one gas storage tank (120) and comprising a plurality of valve outlets, the valve assembly (130) being adapted to be controlled to turn on or off a gas flow passage between the gas outlet end and at least one of the plurality of valve outlets; and
a plurality of nozzle assemblies (140) each comprising a nozzle inlet and at least one nozzle portion in gas-flow communication with the nozzle inlet, the nozzle inlet being coupled to a corresponding valve outlet of the plurality of valve outlets, and the at least one nozzle portion being arranged adjacent to the sensor (101) to spray gas with a predetermined pressure to the sensor (101) to clean the sensor (101) when a corresponding gas flow passage is turned on.

2. The cleaning device (100) according to claim 1, **characterized by** further comprising:
an air drying device (112) arranged at the gas outlet of the gas pump (110) and the gas inlet end of the at least one gas storage tank (120) to dry the gas provided by the gas pump (110).

3. The cleaning device (100) according to claim 1, **characterized by** further comprising:
a plurality of quick connectors (113) respectively arranged at at least one of the following positions:
between the gas outlet of the gas pump (110) and the gas inlet end of the at least one gas storage tank (120);
between the gas outlet end of the at least one gas storage tank (120) and the valve assembly (130); or
between the valve assembly (130) and the plurality of nozzle assemblies (140).

4. The cleaning device (100) according to claim 1, **characterized in that** the valve assembly (130) comprises at least one of: at least one single-inlet and single-outlet solenoid valve (131); or at least one single-inlet and multiple-outlet solenoid valve (132).

5. The cleaning device (100) according to any one of claims 1 to 4, **characterized in that** the gas storage tank (120) further comprises:
a pressure relief valve (121) configured to open when the gas storage tank (120) has a pressure above a pressure threshold; and
a pressure sensor (122) arranged to obtain pressure data in the gas storage tank (120).

6. The cleaning device (100) according to claim 5, **characterized by** further comprising:
a controller (150) coupled to the pressure sensor (122) and the gas pump (110), and configured to control starting and stopping of the gas pump (110) based on the pressure data obtained by the sensor (101).

7. The cleaning device (100) according to claim 5, **characterized in that** the gas storage tank (120) further comprises:
a discharge valve (123) adapted to actively or passively discharge liquid from the gas storage tank (120).

8. The cleaning device (100) according to any one of claims 1-4, 6 and 7, **characterized in that** the nozzle assembly (140) further comprises:
a nozzle holder arranged adjacent to or integrated with the sensor (101) and comprising the nozzle inlet and the at least one nozzle portion.

9. The cleaning device (100) according to claim 2, **characterized in that** the air drying device (112) comprises: a gas-water separation device, a desiccant drying device, or a combination thereof.

10. A vehicle (1), **characterized by** comprising:
the cleaning device (100) according to any one of claims 1 to 9; and
a plurality of sensors (101) arranged at a plurality of positions of the vehicle (1) and coupled to the cleaning device (100).

11. The vehicle (1) according to claim 10, **characterized in that** a gas pump (110) and at least one gas storage tank (120) of the cleaning device (100) are arranged at a bottom of the vehicle (1); and/or
a valve assembly (130) and a plurality of nozzle assemblies (140) of the cleaning device (100) are arranged at a top of the vehicle (1).
